# EUROPEAN PATENT SPECIFICATION

(11) **EP 2 596 155 B1**
(45) Date of publication and mention of the grant of the patent: **12.07.2017**
(21) Application number: 11729189.8
(22) Date of filing: 20.04.2011
(51) Int. Cl.: C25B 9/00, C25B 13/04, C01B 3/58

(54) **MEMBRANE ELECTRO-CATALYTIC SYSTEM AND PROCESS FOR OBTAINING FUEL GAS FROM WATER**
ELEKTROKATALYTISCHES MEMBRANSYSTEM UND VERFAHREN ZUR GEWINNUNG VON BRENNGAS AUS WASSER
SYSTÈME ÉLECTROCATALYTIQUE À MEMBRANES ET PROCÉDÉ DE PRODUCTION DE GAZ COMBUSTIBLE À PARTIR D'EAU

(30) Priority: 23.07.2010 RO 201000642
(43) Date of publication of application: 29.05.2013
(73) Proprietor: S.C. Centrul De Cercetare Pentru Materiale Macromoleculare Si Membrane S.A. (S.C. CCMMM S.A.), 060023 Bucuresti 6 (RO)
(72) Inventor: RADU, Marin, R-050896 Bucuresti 5 (RO); RADU, Florica, R-050896 Bucuresti 5 (RO); RADU, Valentin, R-050896 Bucuresti 5 (RO); RADU, Daniela, R-050896 Bucuresti 5 (RO); CIOROIANU, Florian, R-00092 Craiova (RO); CIOROIANU, Mariana, R-00092, Craiova (RO)
(86) International application number: PCT/RO2011/000015
(87) International publication number: WO 2012/011829

(56) References cited:
- US-A1- 2005 098 443
- US-A1- 2005 217 991
- US-A1- 2008 102 342
- US-A1- 2008 257 751

## Description

The invention refers to an electro-catalytic membrane system and process for the *in situ* generation of a fuel gas from water, under normal temperature and pressure conditions, without requiring transportation or storage, as well as to the characteristics of this gas which make it useful and devoid of risks in exploitation, for both domestic and industrial applications.

The world economic crisis, corroborated with the current climatic changes, have a common denominator, namely the lack of valid technological solutions for regenerative energy.

In the past century the major world powers have led strong battles with the states rich in oil resources, managing to thus lead to intense poverty and human victims. These "imperialist" battles prove today to be useless, being possible for many of the financial and human efforts to be oriented towards the effort of finding alternative solutions for regenerative energy.

Unfortunately, this situation is still valid in the present. Out of inertia, many of today's governments in the strongly developed countries still are and still act under the influence of the events and practices of the past century, aiming at overexploiting the existing fossil fuel resources and investing very little in research so as to find new viable solutions for the energy resources of the incoming generations.

Being used in highly specific purposes in the chemical, electronics and spatial industry, for over three decades, the hydrogen has attracted the interest of the public authorities and of the research institutions, as well as that of the businesspeople, as being a clean fuel for transportation means or as source for generating electric energy. Vast multidisciplinary research and development activities have been initiated and developed with priority all around the globe, aiming at elaborating efficient technologies for the production separation, purification, storage, transportation and utilization of the hydrogen under conditions of security and safety.

In the following, we will present several patent documents that currently exist around the world, documents concerned with the production of hydrogen:
- European Patent Application EP1601613A2 (PCT publication number WO 2004/071946), *System for the production of gas hydrogen.* This system, according to said patent application, uses a catalyst (eg. nickel, cobalt) for the chemical reaction between the Sodium borohydride (NaBH₄) and water, with the generation of hydrogen and Sodium metaborate: NaBH₄ + 2 H₂O 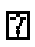 4 H₂ + NaBO₂. The hydrogen thus produced is separated by the means of a membrane (eg. of fluoropolymers). There are many invention patent documents based on this principle, with variations of the reactive materials, structural materials and constructive solutions.
- Great Britain Patent Application GB 2418424 (published on the 29^{th} of March 2006), *Hydrogen Production using the Castner Reaction.* The hydrogen aimed to be used as fuel is produced through the Castner reaction, whereby the sodium hydroxide reacts with carbon in order to produce hydrogen and sodium as main products and sodium carbonate as secondary product. Liquid sodium reacts with a counter current of steam, producing hydrogen again, as well as sodium hydroxide as secondary product. Sodium peroxide then further reacts with water and regenerates sodium hydroxide. The thus generated hydrogen can be burnt by the combination with oxygen, producing high pressure steam, usable for the production of electric energy. As carbon, several items can be used, such as coal, coke or even biological material. For a 500 MW power plant 200 tons of coal per hour are necessary, the global theoretical efficiency being of 32%. The Castner reaction is produced at approximately 1000°C. Primary hydrogen is used for the production of electric energy and secondary hydrogen is used for the heating of the reaction environment.
- US Patent 6303009 B1, *Hydrogen generator with the control of the reversed reaction*. The production of hydrogen can be made through water electrolysis induced in the course of a protons shifting membrane. Hydrogen is produced on one side of the membrane and oxygen on the other. The gas production is calibrated through the electric current which traverses the membrane, provided by a highly efficient, programmable continuous current source. The membrane is not subjected to any pressure difference and does not require support by a metallic net, being highly more durable compared to other solutions of this kind produced before. Several electrolysis cellules can be connected in series. The produced hydrogen is very pure, only being contaminated by water vapors. The electrolysis takes place at a low temperature (preferable under 10-°C), heat shifters being used for taking over the heat produced in the course of the process (thus diminishing the water vapor contamination).

- USA Patent 6257175 B1, *Device for generating oxygen and hydrogen for internal combustion engines.* Hydrogen and oxygen are generated to be used for the internal combustion engine of a vehicle, using the electrical system of the vehicle in order to provide power to the electrolysis process. This process is only active when the engine is working and stops when the engine is switched off. The hydrogen and the oxygen are collected separately and are sent through separate pipes to the engine' distribution system. The used water is completed in a reservoir in which the water level is maintained constant. Distilled water is used, to which sodium hydroxide or a similar electrolyte is added. For electrodes titanium is preferred, but stainless steel or other metals can be equally used.
- European Patent Application EP 0405919 A1 (published on the 2^{nd} of January 1991), *Water-propelled Internal Combustion Engine.* Gas hydrogen is used as fuel for the internal combustion engine, obtained through water electrolysis at the board of the vehicle, injected into the engine's combustion chambers. To produce electrolysis, the electric current generated by the engine is used. Hydrogen is first mixed with saturated dry steam, which leads to a combustion produced at lower temperatures and in an easier to control manner. The invention can be applied in stationary installations for the production of electric energy. To produce electrolysis, "ionized water" is used, that is water which contains ions (for example, water resulted from dissolving salts- distilled water in which NaCl is dissolved at a concentration of 30 g/l), in order to increase its electrical conductibility.

Another well known process is the electrochemical gasification of coal, which is a complex, costly procedure, which generates byproducts such as: ash, tar and sulfur compounds.

In all the cases known up to the present, the production of hydrogen from water is followed by a series of costly operations, such as the liquefaction and storage which lead to the inefficiency of its use in domestic and industrial applications. At the same time, the H-0 mixture resulting from water electrolysis is a gas with reduced applicability because of its known risk of explosion.
The present invention is concerned with an electro-catalytic membrane system according to claim 1.

The electro-catalytic membrane system which is the object of the current invention eliminates the disadvantages of the previously presented inventions, through the fact that it is formed of:
- An electrical supply circuit **(A)** comprising a continuous power source of current **(S)** pulsed with the frequency of 20 kHz.
- A power circuit **(B)** comprising contactors **(C₁)** and **(C₂);**
- An automatic command module of the programming installation;
- An electro-catalytic membrane module **(C)** comprising:
   - inner metallic electrodes **(1),** fitted with two lids **(9)** connected to a system which allows the continuous cooling, the inner electrodes being electroinsulated on the inside and connected to a copper conductor that connects each electrode to the source, as well as some peripheral metallic electrodes **(2),** either plated on the inside with, or having an electro-chemical deposit of composite layer of, a series of metals such as Ni, Cr, Fe, Mg, Cu, said peripheral electrodes being pinned with two plaques of high density polypropylene **(4),** which have four "O" rings **(8),** and being electro-insulated on the outside and connected to a copper conductor which connects each electrode to the source, while the electrodes **(1)** and **(2)** have a wall thickness of -2-3 mm;
   - a catalyst **(13)** based on carbon nano-particles or atoms, acting as an electrolyte, a catalyst, an homogenizing agent and a gas stabilizer; the active surface area of the carbon nano-particles or atoms can reach 2000 m²/g and these can be obtained from carbonized vegetable materials, activated with water vapors the catalyst **(13)** is combined with Ni, Cr, Fe, Mg, Cu, acting as promoters.
   - a recipient **(3)** made of high density polypropylene, provided with two lids **(12',12)**, with minimum level sensors **(m)** and maximum level sensors **(M)**, as well as with a temperature sensor **(T₁)**, wherein the upper lid **(12')** is provided with a conduit for the discharge of the primary gas through the electro-valve **(E₁)** and with a conduit for the water supply from the pump **(P₁)**, through an electro-valve **(E₁')**, while the lower lid **(12)** is provided with a conduit for the discharge of the water when its temperature exceeds **45°C**, upon the signal given by a temperature sensor **(T₁)**, through the electro-valve **(E₂)**, and further through the backflow preventer **(S1)** towards the consumer **(c)**, wherein the lids **(12', 12)** are fitted with an "O" ring sealing system **(10)** for the electrodes **(1)**.
   - two composite membranes **(5)**, **(11)** which are permeable for the formed gas, for the water and for a number of oxides produced in the space created between the electrodes, these composite membranes defining and immobilizing the catalyst **(13)** and the promoters in the space created between the two concentric electrodes **(1)** and **(2)**, wherein one membrane is fixed at its lower end and the other is mobile, being operated by a spring **(15)** which imparts pressure to the catalyst against the electrodes;
   - a system for cooling with water the electrodes, fitted with two electro-insulated surfaces, one on the inside of the electrode **(1)** and the other on the outside of the electrode **(2)**, in order to avoid the creation of ions in the external cooling system circuit of the joint electrodes, also acting as a controller of the amount of the resulted CO₂, said system being made up of a radiator **(6),** conduits **(7)**, said conduits being fitted with a manometer **(M)**, a water feeding tap **(R₁)**, an air vent **(R₂)**, an electro-pump **(P₂),** a filter **(F)**, a pressure relief valve **(S₂)** and a water collector-distributor **(16)**;
- A membrane module **(D)** wherein the ecological gas is obtained, which contains a composite membrane **(22)** having a thickness of 3...5 mm, positioned at the lower end of the body of a recipient **(19),** which ensures the permeability of the gas into the body, as well as a a sieve **(20)** in the shape of a truncated cone and made of stainless steel, loaded with **Mg (21),** which will ensure the reduction of the CO₂ to pure carbon and magnesium oxide.

The electro-catalytic membrane system, according to the invention, comprises several generating modules, connected in series or in parallel to the same power source and to the same regulatory system.

The energetic ratio: consumed electric energy / produced caloric energy residing in hydrogen and the exothermic chemical reaction energy between the catalyst and oxygen, is of 1/2 -1/5.

In a preferred embodiment, the catalyst **(13)** introduced in the space created between the electrodes **(1)** and **(2),** is granular graphite.

The composite membrane **(5)** has a thickness of **7-10** mm and is obtained by pouring over the catalyst and the promoters, a solution of: polysulphide 10-12%, polyethylene glycol (PEG) 0,1-0,2%, while the difference is made up by N-methyl-2-pyrrolidinone (NMP).

In a preferred embodiment, the pipe-shaped electrodes **(1)** and **(2)** are made of copper.

In a preferred embodiment, electrodes **(1)** and **(2) are** pipe-shaped and are made of stainless steel or copper and are spiral-shaped.

In another preferred embodiment, in the space created between the electrodes **(1)** and **(2),** another copper or stainless steel electrode is introduced which will be connected to the negative terminal (cathode).

The membrane module **(D)** can be replaced with a liquid membrane.

The working principle of the electro-catalytic membrane system according to the invention for the obtainment of a fuel gas from water, resides in the fact that, water is traversed by an electric current having the frequency of 20 kHz, tension being variable between 40 ... 80 V, either for 40 sec. of direct tension and 20 sec. of reversed tension, or for 40 min. of direct tension and 20 min. of reversed tension, resulting in a fuel gas containing 98-99% H₂, 0,99-1,8% O₂ -and -0,01-0,2% CO₂, the pressure of the obtained gas being maintained between 0,1 and 0,2 bar, while the water pressure is then maintained between 0,5 and 2 bar, and its temperature between 25 and 45-° C.

In a different embodiment, continuous power sources are used, pulsed with frequencies in the range of 50 Hz - 20 kHz.

The electro-catalytic membrane system, according to the invention, has the following advantages:
- it allows for the production of the ecological fuel gas at maximum efficiency, under normal conditions of temperature and pressure, without requiring transportation and storage;
- the catalyst based on nano-particles and carbon atoms acts as an electrolyte, which brings homogeneity and stability to the gas. Carbon also has a high level of reactivity due to the high frequency electrical impulses which lead to the triggering of its electrons, thus favoring the formation of the carbon dioxide through the reaction with the oxygen from the water;
- the chosen catalyst favors the creation of a high electrical conductivity and of a technical mass transfer, also having a stabilizer role of the fuel gas, through its mixing with the CO₂;
- it uses regular and cost-efficient materials;
- the production of the ecological fuel gas *in situ*, without transportation and storage at the ambient temperature and pressure;
- it has a high efficiency due to the use of the catalyst as agglomerated nano-particles and atoms and of microelements (Ni, Cr, Fe, Mg, Cu) which act as promoters.

The electro-catalytic membrane system for the obtainment of a fuel gas from water, according to the invention, allows a production at maximum efficiency, at normal levels of temperature and pressure, without transportation and storage, being characterized through the fact that it is made up of:
a) An electrical supply circuit **(A)** comprising a high frequency continuous power source **(S)** (20 kHz);
b) A power circtuit **(B)**;
c) a electro-catalytic membrane module **(C),** made up of:
   c1) pairs of copper pipes (the pipes having different diameters), hereinafter named electrodes, having the following dimensions: one of the pipes with the external diameter (d), the other with the internal diameter D = (1,8 - 2) x d, the thickness of the pipes is of 2-3 mm. The larger diameter electrodes are 0,5 - 1 mm thick and -plated on the inside or fitted with an electrochemical coating consisting of a composite layer formed with a series of metals, such as: Ni, Cr, Fe, Mg, Cu, acting as oxidizing and reducing agents. In the space created between the two electrodes, the active coal -formed by carbon nano-particles is introduced, their active surface area reaching 2000 m²/g. These are obtained from vegetal material, activated with water vapors and microelements (Ni, Cr, Fe, Mg, Cu). The role of the carbon nano-particles is that of an electrolyte, a catalyst and a homogenizing agent, favoring the electric conductivity as well as the thermal and mass transfer. The active carbon is at the same time a source of CO₂, acting as stabilizer in the gas mix obtained electro-catalytically. As a result of the interaction of the electric field with water molecules, large surface coal, as well as with a series of microelements, (Ni, Cr, Fe, Mg, Cu); dispersed through the granular carbon, in a volume of 0,1-0,5%, there is an increase in the polarity of the bond H-O leading to the deformation and the break of these bonds. The electro-catalytic process is accelerated through the use of 3d transitional metals (Fe, Ni, Cr, Cu) and Mg acting as promoters. The two electrodes are connected to the continuous power source and the two electrodes are connected in parallel. In order to generate hydrogen *in situ* the chemical, thermal and electrical affinities of the O₂ and its combinations have been watched and exploited, hydrogen practically emerging as a secondary (collateral) element.
   c2) two composite membranes which delimit and fix the catalyst and the promoters between the two concentric electrodes, a membrane which is fixed at the lower end and another membrane which is mobile at the upper end operated by a string which imparts pressure to the catalyst against the electrodes. The composite membrane has a thickness of 7-10 mm and it is obtained by pouring over the catalyst and the promoters, a solution of: polisulphone 10-12%, polyethylene glycol (PEG) 0,1-0,2%, the difference being made up by N-methyl-2-pyrrolidinone (NMP). The composite membrane ensures the permeability of the formed gas, the water and the oxides produced in the space formed between the electrodes. The outer electrode is forseen with an orifice for the feeding with granulare carbon and promoter microelements. Promoters can also be used in an ionic state.
   c3) a system for cooling with water the electrodes, provided with two electro-insulated surfaces, one on the inside of the electrode **(1)** and the other on the outside of the electrode **(2),** in order to avoid the
      creation of ions in the external cooling circuit of the joint electrodes. This cooling system can control the amount of the resulted CO₂ and can absorb between 30-35% of the energy generated in the electro-catalytic system, as a result of the exothermal reactions produced between the electrodes.

The cooling system is made up of a radiator, conduits provided with a manometer **(M),** a water feeding tap **(R₁),** an air vent **(R₂),** an electro-pump **(P₂),** a filter **(F),** a pressure relief valve **(S₂)** and a water collector-distributor **(16).** Another element of the electro-catalytic system is a membrane module **(D)** for the obtainment of the ecologic gas, module which contains a membrane identical with the one described above, the membrane being placed at the base of a housing which ensures the permeability of the gas into the housing. In the housing there is a sieve in the shape of a truncated cone, loaded with Mg which ensures the reduction of the CO₂ with the generation of pure carbon, magnesium oxide and thermal energy, as a result of the exothermal reaction. By passing the hydrogen over the magnesium oxide the magnesium and water are regenerated, this process generating heat.

In a different embodiment, the electrodes can be made up of:
1) three concentric copper or stainless steel pipes, the inner diameter of the third pipe being D₁ = D + d, wherein the inner electrode is connected to the cathode (-) (this also being an attrition electrode), and the other two electrodes being connected to the anode, having the same catalyst content and promoter elements in the space formed between the electrode, or
2) two spiral-shaped copper or stainless steel electrodes with the same axis, 1-1,5 mm thick, provided with a space for the catalyst and the promoter elements.

Another catalyst option is granular graphite used instead of active carbon. The fuel gas obtained contains: 98-99% Hz, 0,99-1,8% O₂, 0,01-0,2% CO₂.

The invention is broadly presented herein below, with reference to the drawings 1... 8.
Figure 1 is a representation of the electro-catalytic membrane system of the invention for the obtainment of the ecological fuel gas from water;
Figure 2 is a longitudinal section through the electro-catalytic membrane system for the generation of the fuel gas from water;

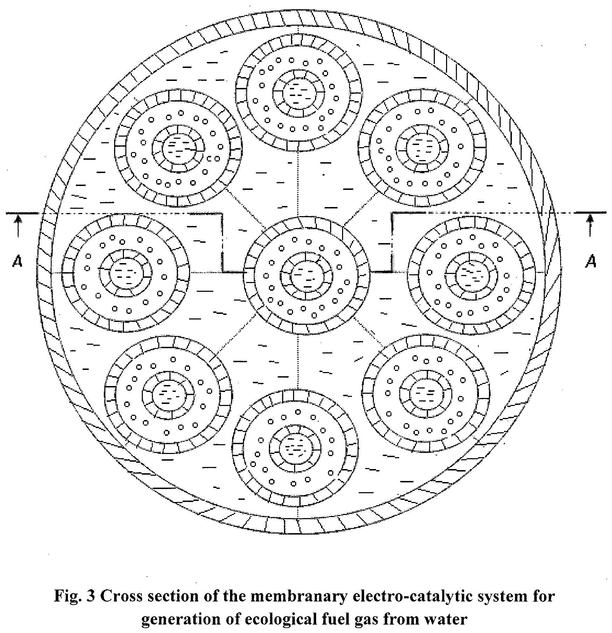

Figure 3 is a transversal section of the electro-catalytic membrane system for the generation of the fuel gas from water;

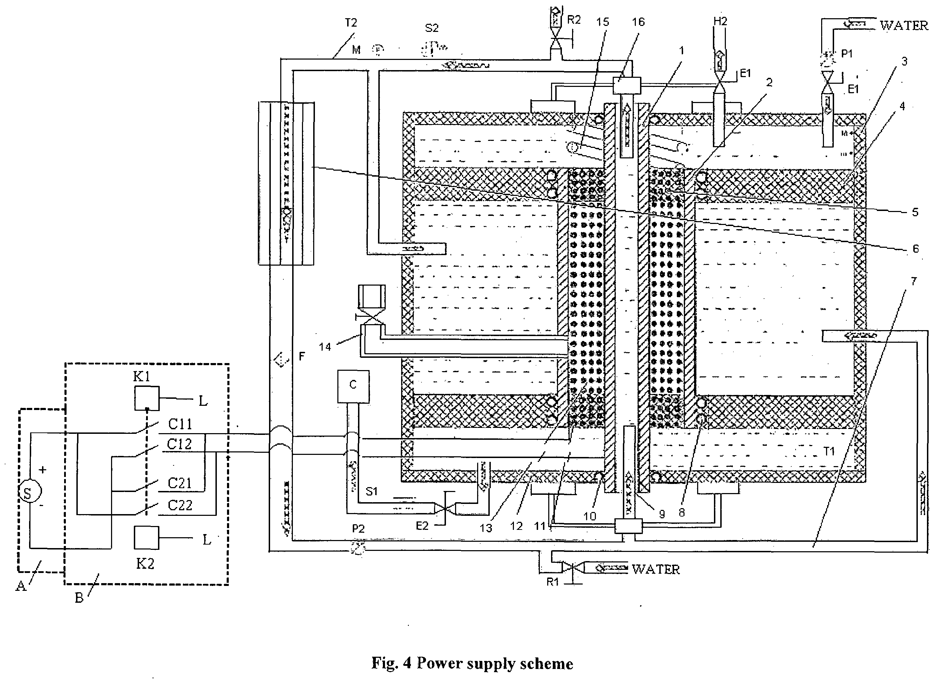

Figure 4 represents a power supply scheme;

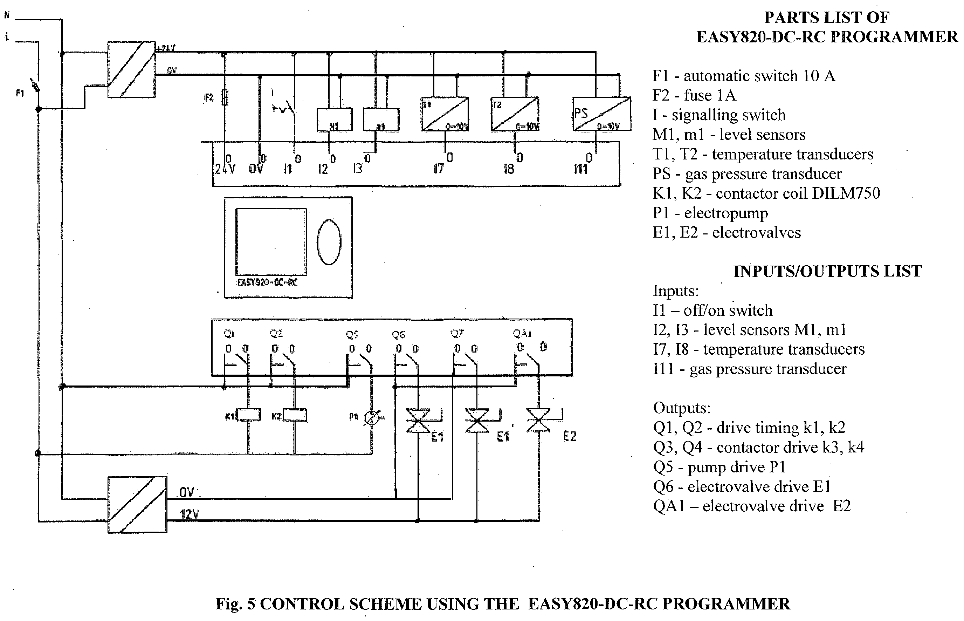

Figure 5 represents a command panel with the programming device EASY820-DC-RC;
Figure 6 illustrates the membrane module of carbon retention;
Figure 7 is an example of concentric electrodes' embodiment;

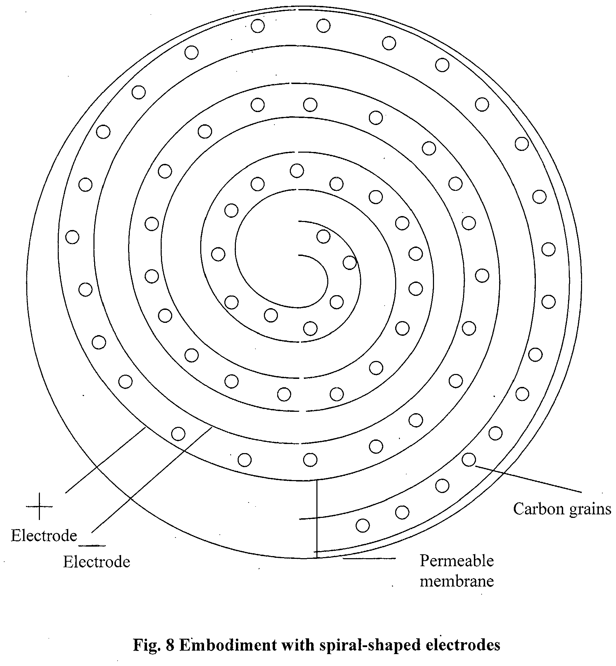

Figure 8 is an example of spiral-shaped electrodes' embodiment.

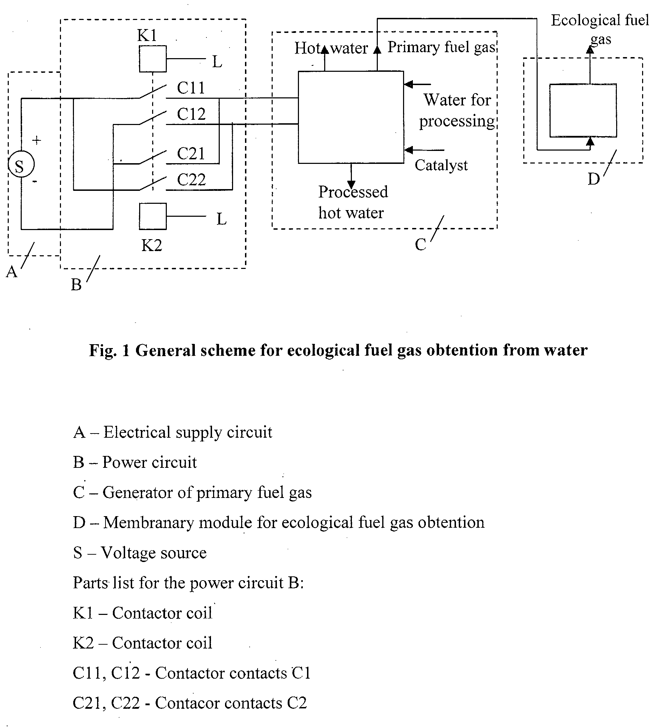

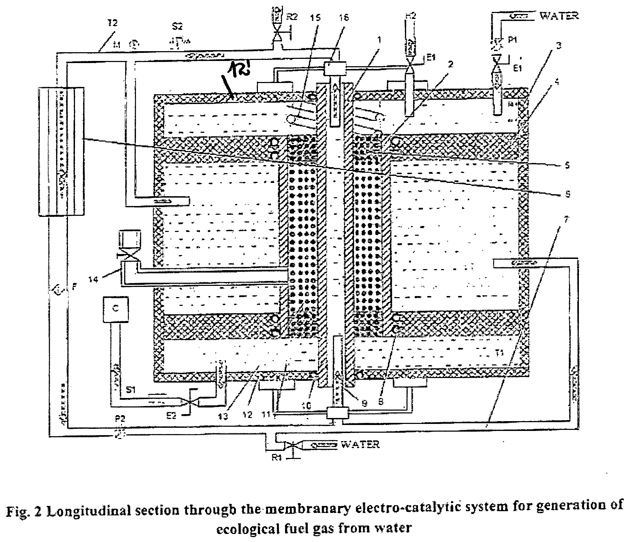

According to the invention, the system solves the problem of producing in *situ* a fuel gas from water by using a catalyst, either consisting of granulare coal with sizes in the range of nano-particles, or very small diameter graphite grains, without the need for transportation and storage of the gas, obtainable at normal temperature and pressure, without explosion dangers. The problem is solved by the fact that the system has the following components:
- an electrical supply circuit **(A)** comprising a continuous power source **(S)**, (see fig.1);
- a power circuit **(B)**; (see fig. 1), which regulates the potential of the electrodes and the intermittent shift in their polarity as well as the amount of water in the generation circuit and in the cooling system on the basis of the temperature sensors **T₁** and **T₂** and of the pressure sensors, the power circuit comprising the contactors **C₁** and **C₂.** The automatic command of the installation is made by the help of the programing device EASY820-DC-RE;
- an electro-catalytic membrane module **C₇** (see fig. 2), made up of:
   ∘ a copper electrode **(1),** with the external diameter d, 9 pieces, fitted with two lids **(9),** which link to a continuous cooling system, electro-insulated on the inside and soldered to a copper conductor which links it to the source;
   ∘ a copper electrode **(2),** with the internal diameter D = (1,8-2) x d, 9 pieces, plated on the inside with, or coated with an electrochemically deposited composite layer made up of a series of metals such as Ni, Cr, Fe, Mg, Cu, with a role in the oxidation-reduction reaction, fixed with two high density polypropylene plates **(4).** Plates **(4),** have four "0" rings **(8)** for each electrode, electroinsulated on the outside and soldered to a copper conductor which links it to the source.

The two electrodes have a wall thickness of 2-3 mm.
∘ A high density polypropylene recipient **(3),** fitted with two lids **(12', 12):**
   - An upper lid **(12')** provide with a conduit for the discharge of the primary gas through the electro-valve **(E₁)** and a conduit for the water supply from pump **(P₁),** through the electro-valve **(E₁');**
   - A lower lid **(12)** provided with a conduit for the discharge of the water when the temperature of the water exceeds 45 °C, upon the signal given by the temperature sensor **(T₁),** through the electro-valve **(E₂),** and further through the backflow preventer **(S₁)** towards the consumer **(c).** The two lids (12', 12) are fitted with an O-ring sealing system **(10),** for the electrodes **(1)**. Screws are used to fix the two lids to the recipient **(3).**
   On the recipient, the minimum **(m)** and maximum **(M)** sensors, as well as the temperature sensor **(T₁)** are fixed.
∘ The composite membrane **(5)**, a spring **(15)**, which imparts a constant pressure of the active coal **(13)** upon the surface of the electrodes **(1)** and **(2),** and, at the same time, ensures a selectivity for the produced gas, allowing the water circulation downwards;
∘ The cooling system is very useful in that the CO₂ can have a lower volume concentration. The better the cooling, the lower the amount of carbon dioxide and this leads to a higher concentration of carbonic acid, which allows the obtainment of an aggressive environment and an enlargement of the hydrogen flow. The cooling system is made up of a radiator **(6)**, conduits **(7)**, provided with a manometer **(M)**, a water feeding tap **(R₁)**, an air vent **(R₂)**, an electro-pump **(P2)**, a filter **(F)**, a pressure relief valve **(S₂)**, a water collector-distributor **(16)**.

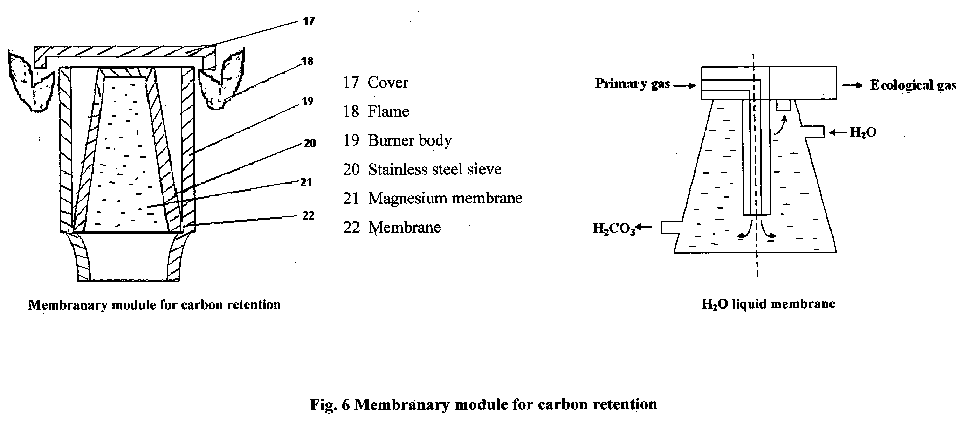

- A membrane module **(D)** for the obtainment of the ecological gas (see **fig. 6**), made up of:
∘ A cast iron lid **(17)**;
∘ A cast iron body **(19)**:
∘ A magnesium composite membrane **(21)**;
∘ A stainless steel sieve **(20)**, which fixes the membrane **(21)**;
∘ A composite membrane; positioned at the lower end of the body **(19)**, with an identical composition with the composite membrane **(5)** illustrated in Figure 2 and having a thickness of 2, 5 mm, which ensures the permeability of the gas into the body.

The preparation and automatic command of the system, including the introduction of the water into the system's circuits and the feeding at set parameters, is made using the programing device EASY 820-DC-RE, for two cycles an intensive cycle, in which the module will work at full charge and a moderate cycle, aimed to maintaining the desired balance state. The programming of the time within which the electrodes are maintained polarized is made taking into account the sedimentation and the degradation state caused by their electro-erosion.

Different functioning cycles have been used to ensure the maximum reliability of the system, as follows: 40 seconds direct power, 20 reversed power or 40 minutes direct power and 20 minutes reversed power, taking into account the electrodes' configuration, as well as the practically obtained results.

The programme that drives the system's programmer is characterized through the fact that it sets the automatic realization of the following functioning sequences:
▪ The feeding of the installation from the power source **(S)** (80 V and 300 A), which is made through the contactors **(K₁)** and **(K₂)** of type DILM750, the reels of the contactors being triggered by the two output relays of the programmer **(Q₁)** and **(Q₂);**
▪ When the gas pressure, measured by the pressure sensor connected to the analytical input **(I₁₁)** of the programmer, exceeds 0,2 bar, **(E₁)** opens and the gas reaches the membrane consumer-module **(D)**; when the pressure of the gas is lower than 0,1 bar, **(E₁)** will close down.
▪ The water from the recipient **(3)** will balance between the two level sensors **(M₁)** and **(m₁),** through the switching on and off of the electro-pump **(P₁)** (UPS 32-60), simultaneously with the opening and closing of the electro-valve **(E₁')**, fed at 220 V through the output reel **(Q₅)** of the programmer.
▪ The immersion temperature transducer **(T₁)** (TLT130) connected to the analytical input **(I₇)**, will set the temperature limits of the water to allow the normal functioning of the electro-catalytic membrane system which produces the fuel gas; when T₁ > 45 °C, the electro-valve will open **(E₂)**, connected to the output **(QA₁)**, and warm water will be directed towards the consumer **(c)**, and for the water cooling electro-pump **(P₁)** is switched on while **(E₁)** is closed. When T₁ < 25 °C, the pump **(P₁)** and the electro-valve **(E₂)** will shut down.
▪ The temperature transducer **(T₂)** (TLT130), connected to the analytical input **(I₈)** of the programmer, will set the optimal temperature interval for the heating of the radiator so that if T₂ > 45 °C, the generator stops being fed, the electro-pump **(E₁),** stops working **(P₂)** and when the water temperature decreases to a level preset by the beneficiary and set by the programmer, the installation sets on again.
▪ The pressure relief valve **(S₂)**, will automatically open when the pipes' water pressure will overpass 2 bar, and the installation can be shut even if the pressure detected by the pressure sensor, situated in recipient **(3)**, is higher than 0,5 bar, by automatically turning on/off the switch **(I)**.

From an electrochemical point of view, electons migrate from the cathode (-) towards the anode (+), thus generating metallic ions which detach from the cathode and migrate to the anode, depositing metallic elements on the surface of the anode.

### Chemical reactions within the process

4H₂O + C -> CO₂ + 4H₂ + O₂+ Q

Part of the CO₂ is eliminated together with the H₂, O₂ and Q and the other part reacts with the H₂O, increasing its conductivity by producing an electrolyte (H₂CO₃), proportionally with the cooling degree.

CO₂ + H₂O <-> H₂CO₃

H₂CO₃ <-> H⁺ + HCO₃⁻

HCO₃⁻ <-> H⁺ + CO₃²⁻

4H⁺ + 4 e⁻ -> 2H₂

C + O₂ = CO₂ + 4 e⁻

H₂O + H₂CO₃ -> CO₂ + 2H₂ + O₂

Output

+ Mg CO₂ + H₂ + O₂ -> 2MgO + C + H₂ + O₂ + Q

where

CO₂ + H₂ + O₂- primary fuel gas, but also ecological fuel gas.

In order to regenerate the magnesium catalyst, hydrogen is passed over the magnesium oxide resulting pure magnesium and water.

An alternative to the use of magnesium is a liquid membrane (H₂O) where CO₂ is retrained. In this embodiment, water must be as cold as possible and must be re-circulated so as to increase the CO₂ absorption degree.

The primary gas concentration is the following:
95-98% H₂;
1,9-2,5% O₂;
0,1-2,5% CO₂.

The concentration of the ecological fuel gas obtained after the purification through the composite membrane based on magnesium is the following:
98-99% H₂;
0,99-1,8% O₂;
0,01-0,2% CO₂.

Fuel gas was analyzed through chromatography by accredited laboratories: DOLJCHIM Craiova and The Institute of Physical Chemistry of the Romanian Academy.

The electro-catalytic process can be accelerated through the use of 3d transitional metals (Fe, Ni, Cr, Cu) and Mg acting as promoter. Metals sediment on the cathode or are included among the carbon granules.

The electrochemical phenomena which take place as a result of the sedimentation of the metals (the ionization and sedimentation on the anode) are the cause of their promoting action over the electro-catalytic process produced.

At the level of the fuel gas generation, according to the invention, the process is maintained at the same potential, so that it ensures a distribution of the electrical field lines towards the full mass of electrodes, active coal with nanometric particles and water. This electric configuration, associated with the qualities of active coal or graphite manifested all along the surface of the interface between water and carbon, ensures maximum efficiency. An important electrodes polarization shift, position 1 and position 2 (see fig. 2), ensures a larger reliability, given the corrosive effect at the cathode (-), so that the produced ions can be transported from one electrode to the other.

An important element for the invention is that it can be modulated according to the necessities. It is appropriate for stationary applications but also for transportation-specific applications, due to its adaptability.

Basically, the procedure resides in:
- the partial electro-chemical oxidation of carbon and other elements (Cr, Ni, Mg, Cu, Fe) with the oxygen from water, releasing H₂.

The oxidation reaction releases heat which is then recaptured through the cooling of the electrodes.

Under the conditions in which the process water temperature (the decomposition) but also the electrodes' temperature is lower, a series of chained reactions take place, favoring the production of increased purity hydrogen, as mentioned above.

The reactivity of the oxidation processes in the presence of carbonic acid exceeds by far the one obtained in the presence of acetic acid or formic acid.

At a water temperature above 45-°C one may notice the reduction of the amount of hydrogen and increase of the production of CO₂. Practically, the process is inefficient for the aimed purpose, which is that of obtaining a highly ecological fuel.
- the oxidation of the cathode

It supposes two parallel and simultaneous reactions, chained through a rigorous energetic chain of reactions: one of oxidation and one of reduction.

The oxidation reaction supposes the ionization of the metal. The metallic structure is made up of metallic ions and electrons network, the electrons moving within the valence band under the action of the external electric field or through temperature increase.

In the presence of the aggressive environment, the metals have a tendency to pass as ions in the environment, leaving on the metal a net charge, made up of electrons corresponding to the ionized metallic atom. The negative charge of the metallic surface attracts a quantity of positive ions in the immediate vicinity, absorbing the cations present in the environment and the polar or polarizable molecules from the space formed between the electrodes.

Over the ions and dipoles in the electrodes, electrostatic forces act, triggered by the contrary sign charges on the surface of the metal which tend to distribute unevenly while the thermal agitation tend to distribute them evenly in the solution. The result of the two actions leads to a difference of potential between the metallic surface and the solution (environment) which contains contrary sign charges.

The metal ionization reaction can be thus described:

M -> M^{z+}+ze

The metallic ions either combine and pass through in a solid state being eliminated as oxides, or are attracted by the anode which, together with the electrodes released at the cathode sediment in a metallic form.
- the oxidation of the introduced microelements.

The oxidation of the microelements introduced in the reaction environment leads to an intensification of the water decomposition processes and, implicitly, to the increase of the amount of hydrogen. This burning reaction of the microelements, is similar to the one taking place in the human body producing an excess of energy and simultaneously releasing a large quantity of hydrogen.
The process of hydrogen generation is much more intensified when, in the reaction environment, instead of microelements, metallic ions would be introduced, having a high reaction capacity with oxygen.

Thus, in view of producing as much hydrogen as possible from water, we watched and exploited the chemical, thermal and electrical affinities of oxygen and its compounds, hydrogen practically emerging as a secondary (collateral) element.

### Working examples

### Example 1.

A continuous power source of 80 V and 300 A was used, a generator module with 9 electrode pairs, capacitating 100 l of water. The electrodes were connected to the source, ensuring the alternance of their polarity of 40 de seconds / 20 de seconds, thus obtaining:
- consumed electric energy - 7 kWh;
- obtained caloric energy - 4 Nm³ fuel gas;
- caloric energy - 4,7 kWh.

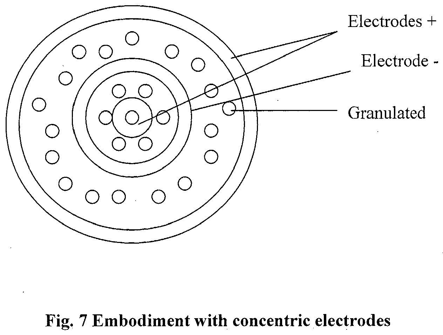

### Example 2 (see fig. 7).

Under the same conditions as those disclosed in the first example, a third electrode is introduced between the electrodes **(1)** and **(2)**, this electrode being connected to the cathode (-), while the electrodes **(1)** and **(2)** will be connected to the anode (+). The newly introduced electrode is an attrition electrode, it can function on a longer period of time with the above mentioned polarization, afterwards the electrodes' polarization can be changed so that the system's reliability would increase. The attrition electrode can be a composite of carbon, magnesium, copper, iron, nickel, and chrome, either under various combinations of these elements or in a pure, unaltered state of the above mentioned components. In this case, the flux of the fuel gas increases by approximately 20%.

## Claims

1. An electro-catalytic membrane system for the preparation of fuel gas from water, comprising:
a) an electrical supply circuit **(A)** comprising a continuous power source **(S)** pused with a frequency ranging from 50 Hz to 20 kHz;
b) an electronic control system comprising:
i) a power circuit **(B)** comprising contactors **(C₁)** and **(C₂)** and
ii) a programmable control unit;
c) an electro-catalytic membrane module **(C)** comprising:
i) inner and peripheral metallic electrodes **(1, 2)** disposed in concentric arrangement, each electrode being connected to the source by a copper conductor and having a wall thickness ranging from 2 to 3 mm, wherein the inner electrodes **(1)** are insulated on their inner surface and fitted with two lids **(9)** which are connected to a system for continuous cooling the electrodes and wherein the peripheral electrodes **(2)** are insulated on their outer surface and either plated with, or having a composite layer consisting of an electrochemical deposit of, various metals such as Ni, Cr, Fe, Mg, Cu, on their inner surface, said peripheral electrodes being also fixed by two high density polypropylene plaques **(4)** which are fitted with four rings **(8),**
ii) a catalyst **(13)** acting as an electrolyte, comprising carbon nano-particles and carbon atoms obtainable from carbonized vegetable materials activated with water vapors, or granular graphite, said catalyst **(13)** being combined with Ni, Cr, Fe, Mg, Cu acting as promoters and being present either as microelements, or as metallic ions, said carbon nano-particles and carbon atoms having an active surface which reaches 2000 m²/g.
iii) a high density polypropylene recipient **(3)** provided with an upper and a lower lid **(12', 12')**, minimum **(m)** and maximum **(M)** level sensors and a temperature sensor **(T₁).**
wherein the upper lid **(12')** is provided with a conduit for the discharge of the primary gas through an electro-valve **(E₁)** and with a conduit for the water supply from the pump **(P₁)** through an electro-valve **(E₁')**, and
the lower lid **(12')** is provided with a conduit for the discharge of the water through the electro-valve **(E₂)** and further through the backflow preventer **(S₁)** to the consumer **(c),** when the temperature of the water exceeds 45°C upon the signal given by the temperature sensor,
the lids **(12', 12')** being fitted with an O-ring sealing system **(10)** for the electrodes **(1)**.
iv) two composite membranes **(5), (11)** which define and immobilize the catalyst **(13)** and the promoters in the space created between the two concentric electrodes **(1)** and **(2),** said membranes being permeable for the gas, water and oxides produced in the said space, wherein
the lower membrane **(11)** is fixed, and
the upper membrane **(5)** is mobile, being operated by a spring **(15)** which imparts pressure to the catalyst against the electrodes,
v) a system for cooling with water the electrodes **(1, 2)** fitted with two insulated surfaces, one on the inner surface of the electrode **(1)** and the other on the outer surface of the electrode **(2)** in order to avoid the creation of ions in the external cooling system of the joint electrodes, and for the control of the amount of the resulted CO₂, said system being made up of a radiator **(6),** conduits **(7),** said conduits being provided with a manometer **(M)**, a water feeding tap **(R₁),** an air vent **(R₂),** an electro-pump **(P₂)**, a filter **(F),** a pressure relief valve **(S₂)** and a water collector-distributor **(16)**; and
d) a membrane module **(D)** wherein the fuel gas is obtained, made up either of
i) a composite membrane **(22)** having a thickness ranging from 3 to 5 mm, positioned at the lower end of the body of a recipient **(19),** to allow the gas to pass into said body, and a sieve **(20)** in the shape of a truncated cone and made of stainless steel, wherein said sieve is loaded with Mg **(21)** to ensure the reduction of the CO₂ into pure carbon and magnesium oxide, or
ii) a liquid membrane.

2. An electro-catalytic membrane system according to claim 1, **characterized in that** it comprises several electro-catalytic membrane modules **(C)** connected in series or in parallel to the same power source **(S)** and to the same electronic control system.

3. An electro-catalytic membrane system according to claim 1, **characterized in that** the composite membrane **(5)** has a thickness ranging from 7 to 10 mm and it is obtainable by pouring a solution over the catalyst and promoters, wherein the solution consists of 10-12% polysulphone, 0.1-0.2% polyethylene glycol and up to 100% N-methyl-2-pyrrolidinone.

4. An electro-catalytic membrane system according to claim 1, **characterized in that** the electrodes **(1)** and **(2)** are pipe shaped and made of copper or stainless steel.

5. An electro-catalytic membrane system according to claim 1, **characterized in that** the electrodes **(1)** and **(2)** are spiral-shaped and made of copper or stainless steel.

6. An electro-catalytic membrane system according to claim 1, **characterized in that** a third electrode made of copper or stainless steel is inserted in the space created between the electrodes **(1)** and **(2)** and it is connected to the cathode.

7. A process for obtaining fuel gas from water using an electro-catalytic membrane system as defined in any of the preceding claims, **characterized in that** an electrical current with a frequency ranging from 50 Hz to 20 kHz and a variable voltage ranging from 40 to 80 V is run through water, either by applying a direct voltage for 40 seconds and a reverse voltage for 20 seconds, or by applying a direct voltage for 40 minutes and a reverse voltage for 20 minutes, to obtain a fuel gas containing 98-99% H2, 0.99-1.80% O₂ and 0.01-0.2% CO₂ under a pressure maintained between 0.1 and 0.2 bar, while the water pressure ranges between 0.5 and 2 bar and its temperature between 25 and 45°C.

8. A process according to claim 7, **characterized in that** the frequency of the electrical current is 20 kHz.

9. Use of a catalyst comprising carbon nano-particles and carbon atoms as an electrolyte in a process for the preparation of hydrogen containing fuel gas from water, in an electrocatalytic membrane system according to claim 1.

10. Use of a catalyst comprising carbon nano-particles and carbon atoms for the homogenization of a hydrogen containing fuel gas, in an electro-catalytic membrane system according to claim 1.

11. Use of a catalyst comprising carbon nano-particles and carbon atoms for the stabilization of a hydrogen containing fuel gas, in an electro-catalytic membrane system according to claim 1.

## Patentansprüche

1. Ein elektrokatalytisches Membransystem zur Zubereitung von Brenngas aus Wasser, bestehen aus
a) eine elektrische Versorgungsschaltung **(A)** mit einer kontinuierlichen Stromquelle **(S)** gepulst mit einer Frequenz von 50 Hz bis 20 kHz;
b) ein elektronisches Steuersystem mit:
i) ein Stromkreis **(B)** mit Schützen **(C1)** und **(C2)** und
ii) eine programmierbare Steuereinheit;
c) ein elektrokatalytisches Membranmodul **(C)** umfassend:
i) innere und periphere metallische Elektroden **(1, 2)** in konzentrischer Anordnung angeordnet, wobei jede Elektrode mit der Quelle verbunden ist durch einen Kupferleiter und mit einer Wanddicke von 2 bis 3 mm, wobei die inneren Elektroden **(1)** sind auf ihrer inneren Oberfläche isoliert und mit zwei Deckeln ausgestattet **(9)** die mit einem System zur kontinuierlichen Kühlung der Elektroden verbunden sind und wobei die peripheren Elektroden **(2)** sind auf ihrer äußeren Oberfläche isoliert und entweder mit, oder mit einer Verbundschicht überzogen bestehend aus einer elektrochemischen Ablagerung von verschiedene Metalle wie Ni, Cr, Fe, Mg, Cu, auf ihrer inneren oberfläche, wobei die peripheren Elektroden ebenfalls fixiert sind durch zwei hochdichte Polypropylen-Plaques **(4)** die mit vier Ringen ausgestattet sind **(8)**;
ii) ein Katalysator **(13)** als elektrolyt fungieren, umfassend Kohlenstoff-Nanopartikel und Kohlenstoffatome, erhältlich von karbonisierte pflanzliche materialien aktiviert mit Wasserdämpfen, oder körniger Graphit, der Katalysator **(13)** kombiniert mit Ni, Cr, Fe, Mg, Cu, als promoter tätig und entweder als Mikroelemente vorliegen oder als metallische Ionen, die Kohlenstoff-Nanopartikel und Kohlenstoffatome mit einer aktiven Oberfläche, die erreicht wird 2000 m²/g;
iii) ein hochdichter Polypropylen-Empfänger **(3)** mit einem oberen und einem unteren Deckel versehen **(12, 12'),** minimale **(m)** und maximale **(M)** Füllstandssensoren und einen Temperatursensor **(T₁),** wobei der obere Deckel **(12)** ist mit einer Leitung versehen für die Entladung von Primärgas durch ein elektroventil **(E₁)** und mit einer Leitung für die Wasserversorgung von der Pumpe **(P₁)** durch ein elektroventil **(E₁')** und der untere Deckel **(12')** ist mit einer Leitung für die Ableitung des Wassers versehen durch ein elektroventil **(E₂)** und weiter durch den Rückflussverhinderer **(S₁)** dem Verbraucher **(c)**, wenn die Temperatur des Wassers überschreitet 45 °C auf das vom Temperatursensor gegebene Signal, die Deckel **(12, 12')** mit einem O-Ring-Dichtsystem ausgestattet **(10)** für die elektroden **(1)**;
iv) zwei zusammengesetzte Membranen **(5)**, **(11)** die den Katalysator **(13)** und promoter definieren und immobilisieren in dem Raum zwischen den beiden konzentrischen Elektroden **(1)** und **(2)**, wobei die Membranen für das in dem Raum erzeugte Gas, Wasser und Oxide durchlässig sind, wobei die untere Membran **(11)** is fest und die obere Membran **(5)** ist mobil, von einer Feder betrieben werden **(15)** die dem Katalysator Druck gegen die Elektroden verleiht;
v) ein System zum Kühlen der Elektroden **(1, 2)** mit Wasser mit zwei isolierten Oberflächen ausgestattet, eine auf der inneren Oberfläche der Elektrode **(1)** und der andere auf der äußeren Oberfläche der Elektrode **(2)** um zu vermeiden die Erzeugung von Ionen im externen Kühlsystem der Gelenkelektroden und für die Kontrolle der Menge der resultierenden CO₂, Wobei das System besteht aus einem Kühler **(6),** Leitungen **(7)**, wobei die Leitungen mit einem Manometer **(M),** ein Wasserzufuhrventil **(R₁),** eine Entlüftung **(R₂),** eine elektropumpe **(P₂),** ein filter **(F)**, ein Überdruckventil **(S₂)** und ein Wassersammler-Verteiler **(16)** versehen sind; und
d) ein Membranmodul **(D)** wobei das Brenngas erhalten wird, erfolgt entweder in
i) eine zusammengesetzte Membran **(22)** mit einer Dicke von 3 bis 5 mm, am unteren Ende des Körpers eines Behälter **(19)** positioniert, zu ermöglichen das Gas in den Körper passieren und ein Sieb **(20)** in der Form von Kegelstumpf aus rostfreiem stahl, wobei das Sieb beladen ist mit Mg **(21)** um die Reduktion des CO₂ zu reinem Kohlenstoff und Magnesiumoxid zu gewährleisten, oder
ii) eine Flüssigmembran.

2. Ein elektrokatalytisches Membransystem nach Anspruch 1, **dadurch gekennzeichnet daß** sie es besteht aus mehreren elektrokatalytisches Membranmodul **(C)** in Serie oder parallel geschaltet zu der gleichen Stromquelle **(S)** Und dem gleichen elektronischen Steuerungssystem.

3. Ein elektrokatalytisches Membransystem nach Anspruch 1, **dadurch gekennzeichnet daß** sie die Verbundmembran **(5)** hat eine dicke von 7 bis 10 mm und es ist erhältlich indem man eine Lösung übergießt den Katalysator und die Promotoren, wobei die Lösung besteht aus 10-12% Polysulfon, 0,1-0,2% Polyethylenglykol und bis zu 100% N-Methyl-2-pyrrolidinon.

4. Ein elektrokatalytisches Membransystem nach Anspruch 1, **dadurch gekennzeichnet daß** sie die Electroden **(1)** und **(2)** sind rohrförmig und aus Kupfer oder Edelstahl gefertigt.

5. Ein elektrokatalytisches Membransystem nach Anspruch 1, **dadurch gekennzeichnet daß** sie die Electroden **(1)** und **(2)** sind spiralförmig und aus Kupfer oder Edelstahl gefertigt.

6. Ein elektrokatalytisches Membransystem nach Anspruch 1, **dadurch gekennzeichnet daß** sie eine dritte Elektrode aus Kupfer oder Edelstahl gefertigt wird in den zwischen den Elektroden **(1)** und (2) erzeugten Raum eingesetzt und es ist mit der Kathode verbunden.

7. Ein Verfahren zur Gewinnung von Brenngas aus Wasser, mit einem elektrokatalytisches Membransystem nach wie in einem der vorhergehenden Ansprüche definiert, **dadurch gekennzeichnet daß** sie ein elektrischer Strom mit einer Frequenz von 50 Hz bis 20 kHz Und eine variable Spannung von 40 bis 80 V wird durch Wasser geführt, entweder durch Anlegen einer Gleichspannung für 40 Sekunden und eine Sperrspannung für 20 Sekunden, oder durch Anlegen einer Gleichspannung für 40 Minuten und eine Sperrspannung für 20 Minuten, um ein Brenngas zu erhalten, das enthält 98-99% H₂, 0,99-1,80% O₂ et 0,01-0,2% CO₂ unter einem Druck zwischen 0,1 und 0,2 bar, während der Wasserdruck zwischen 0,5 und 2 bar und seine Temperatur zwischen 25 und 45 °C.

8. Verfahren nach Anspruch 7, **dadurch gekennzeichnet daß** sie die Frequenz des elektrischen Stroms es ist 20 kHz

9. Verwendung eines Katalysators umfassend Kohlenstoff-Nanopartikel und Kohlenstoffatome, als Elektrolyt in einem Verfahren zur Herstellung von Wasserstoff enthaltenden Brenngas aus Wasser, in einem elektrokatalytisches Membransystem nach Anspruch 1.

10. Verwendung eines Katalysators umfassend Kohlenstoff-Nanopartikel und Kohlenstoffatome für die homogenisierung von Wasserstoff enthaltenden Brenngas, in einem elektrokatalytisches Membransystem nach Anspruch 1.

11. Verwendung eines Katalysators umfassend Kohlenstoff Nanopartikel und Kohlenstoffatome für die stabilisierung von Wasserstoff enthaltenden Brenngas, in einem elektrokatalytisches Membransystem nach Anspruch 1.

## Revendications

1. Un système électro-catalytique membranaire pour la préparation de gaz combustible à partir de l'eau, qui consiste à
a) un circuit d'alimentation électrique **(A)** comprenant une source d'alimentation continue **(S)** pulsé avec une fréquence allant de 50 Hz à 20 kHz;
b) un système de commande électronique comprenant:
i) un circuit de puissance **(B)** comprenant des contacteurs **(C1)** et **(C2)** et
ii) une unité de commande programmable;
c) un module électro-catalytique membranaire **(C)** comprenant:
i) électrodes métalliques internes et périphériques **(1, 2)** disposés en arrangement concentrique, chaque électrode étant connecté à la source par un conducteur en cuivre et ayant une épaisseur de paroi allant de 2 à 3 mm, où les électrodes intérieures **(1)** sont isolés sur leur surface intérieure et équipés de deux couvercles **(9)** qui sont connectés à un système de refroidissement continu des électrodes et où les électrodes périphériques **(2)** sont isolés sur leur surface extérieure et soit plaqués avec, soit ayant une couche composite constituée d'un dépôt électrochimique de divers métaux tels que Ni, Cr, Fe, Mg, Cu, sur leur surface intérieure, lesdites électrodes périphériques étant également fixées par deux plaques de polypropylène haute densité **(4)** qui sont équipés de quatre anneaux **(8);**
ii) un catalyseur **(13)** agissant comme un electrolyte, comprenant des nanoparticules de carbone et des atomes de carbone obtenues à partir de matières végétales carbonisées activés avec de la vapeur d'eau, ou graphite granulaire, ledite catalyseur **(13)** étant combiné avec Ni, Cr, Fe, Mg, Cu, agissant comme promoteurs et étant présents soit sous forme de microéléments ou sous forme d'ions métalliques, lesdites nanoparticules de carbone et atomes de carbone ayant une surface active qui atteint 2000 m²/g;
iii) un récipient de polypropylène à haute densité **(3)** muni d'un couvercle supérieur et d'un couvercle inférieur **(12, 12'),** capteurs de niveau minimum **(m)** et maximum **(M)** et capteur de température **(T₁)**, où le couvercle supérieur **(12)** est muni d'un conduit pour le rejet du gaz primaire par une électrovanne **(E₁)** et d'un conduit pour l'alimentation en eau de la pompe **(P₁)** par une électrovanne **(E₁')** et le couvercle inférieur **(12')** est muni d'un conduit pour décharge de l'eau à travers l'électrovanne **(E₂)** et en outre à travers le dispositif anti-refoulement **(S₁)** au consommateur **(c)**, lorsque la température de l'eau dépasse 45 °C sur le signal donné par le capteur de température, les couvercles **(12, 12'),** étant équipé d'un joint torique d'étanchéité **(10)** pour les électrodes **(1)**;
iv) deux membranes composites **(5)**, **(11)** qui définissent et immobilisent le catalyseur **(13)** et les promoteurs dans l'espace créé entre les deux électrodes concentriques **(1)** et **(2),** lesdites membranes étant perméable pour le gaz, l'eau et les oxydes produits dans ledit espace, où la membrane inférieure **(11)** est fixe et la membrane supérieure **(5)** est mobile, étant actionné par un resort **(15)** qui exerce une pression sur le catalyseur contre les électrodes;
v) un système de refroidissement à l'eau des électrodes **(1, 2)** équipé de deux surfaces isolées, un sur la surface interne de l'électrode **(1)** et l'autre sur la surface externe de l'électrode **(2)** afin d'éviter la création d'ions dans le système de refroidissement externe des électrodes communes et pour le contrôle de la quantité de CO₂ résultant, ledite système étant constitué d'un radiateur **(6)**, conduits **(7)**, lesdites conduits étant munis d'un manomètre **(M)**, un robinet d'alimentation en eau **(R₁)**, un évacuation d'air **(R₂)**, une électro-pompe **(P₂)**, un filtre **(F)**, une soupape de surpression **(S₂)** et un collecteur-distributeur d'eau **(16)**; et
d) un module membranaire **(D)** dans lequel le gaz combustible est obtenu, constitué soit de
i) une membrane composite **(22)** ayant une épaisseur allant de 3 à 5 mm, positionné à l'extrémité inférieure du corps d'un recipient **(19)**, pour permettre au gaz de passer dans ledit corps et un tamis **(20)** en forme de tronc de cone en acier inoxydable, où ledit tamis est chargé de Mg **(21)** pour assurer la réduction de CO₂ en carbone pur et en oxyde de magnesium, ou
ii) une membrane liquide.

2. Un système électro-catalytique membranaire selon la revendication 1, **caractérisé en ce qu**'**il** comprend plusieurs modules électro-catalytiques de membranaires **(C)** connectés en série ou en parallèle à la même source d'alimentation **(S)** et au même système de commande électronique.

3. Un système électro-catalytique membranaire selon la revendication 1, **caractérisé en ce que** la membrane composite **(5)** a une épaisseur allant de 7 à 10 mm et on peut l'obtenir en versant une solution sur le catalyseur et promoteurs, où la solution consiste en 10-12% polysulfone, 0,1-0,2% polyéthylène glycol et jusqu'à 100% N-méthyl-2-pyrrolidinone.

4. Un système électro-catalytique membranaire selon la revendication 1, **caractérisé en ce que** les électrodes **(1)** et **(2)** sont en forme de tuyau et sont en cuivre ou en acier inoxydable.

5. Un système électro-catalytique membranaire selon la revendication 1, **caractérisé en ce que** les électrodes **(1)** et **(2)** sont en forme de spirale et sont en cuivre ou en acier inoxydable.

6. Un système électro-catalytique membranaire selon la revendication 1, **caractérisé en ce que** une troisième électrode en cuivre ou en acier inoxydable est insérée dans l'espace créé entre les électrodes **(1)** et **(2)** et cela est relié à la cathode.

7. Un procédé pour obtenir du gaz combustible à partir de l'eau, en utilisant un système électro-catalytique membranaire selon l'une quelconque des revendications precedents, **caractérisé en ce que** un courant électrique avec une fréquence allant de 50 Hz à 20 kHz et une tension variable allant de 40 à 80 V est passé à travers l'eau, soit par l'application d'une tension continue pendant 40 secondes et d'une tension inverse pendant 20 secondes, ou par l'application d'une tension continue pendant 40 minutes et d'une tension inverse pendant 20 minutes, pour obtenir du gaz combustible contenant 98-99%H₂, 0,99-1,80% O₂ et 0,01-0,2% CO₂ sous une pression maintenu entre 0,1 et 0,2 bar, tandis que la pression d'eau est situé entre 0,5 et 2 bar et sa température entre 25 et 45 °C.

8. Un procédé selon la revendication 7, **caractérisé en ce que** la fréquence du courant électrique est de 20 kHz.

9. Utilisation d'un catalyseur comprenant des nanoparticules de carbone et des atomes de carbone comme électrolyte dans un procédé pour la préparation de gaz combustible contenant de l'hydrogène à partir de l'eau, dans un système électro-catalytique membranaire selon la revendication 1.

10. Utilisation d'un catalyseur comprenant des nanoparticules de carbone et des atomes de carbone pour l'homogénéisation d'un gaz combustible contenant de l'hydrogène, dans un système électro-catalytique membranaire selon la revendication **1.**

11. Utilisation d'un catalyseur comprenant des nanoparticules de carbone et des atomes de carbone pour la stabilization d'un gaz combustible contenant de l'hydrogène, dans un système électro-catalytique membranaire selon la revendication 1.
